# FASCICULE DE BREVET EUROPEEN

(11) **EP 3 347 740 B1**
(45) Date de publication et mention de la délivrance du brevet: **29.01.2020**
(21) Numéro de dépôt: 16762815.5
(22) Date de dépôt: 08.09.2016
(51) Int. Cl.: G01T 1/169, G21F 9/00

(54) **DISPOSITIF D'ANALYSE IN SITU D'UN DECHET RADIOLOGIQUE CONTENANT L'ISOTOPE CHLORE 36**
GERÄT ZUR IN-SITU ANALYSE VON CHLOR 36 ENTHALTENDEM RADIOAKTIVEN ABFALL
DEVICE FOR IN-SITU ANALYSIS OF RADIOACTIVE WASTE CONTAINING CHLORINE 36

(30) Priorité: 10.09.2015 FR 1558443
(43) Date de publication de la demande: 18.07.2018
(73) Titulaire: Electricité de France, 75008 Paris (FR); ArianeGroup SAS, 75015 Paris (FR)
(72) Inventeur: LAURENT, Gérard, 69100 Villeurbanne (FR); FONGARLAND, Christophe, 75001 Paris (FR); DUMONT, Jean-Luc, 78112 Fourqueux (FR); LE TOURNEUR, Philippe, 77330 Ozoir La Ferriere (FR)
(74) Mandataire: Regimbeau
(86) Numéro de dépôt international: PCT/EP2016/071156
(87) Numéro de publication internationale: WO 2017/042256

(56) Documents cités:
- WO-A1-2013/120919
- RODRÍGUEZ M ET AL: "Radiochemical analysis of chlorine-36", CZECHOSLOVAK JOURNAL OF PHYSICS, KLUWER ACADEMIC PUBLISHERS-CONSULTANTS BUREAU, NE, vol. 56, no. 1, 1 janvier 2006 (2006-01-01), pages D211-D217, XP019525041, ISSN: 1572-9486
- J A B GIBSON '? ET AL: "Absolute standardization with liquid scintillation counters Absolute standardization with I iq u id sci nti I latio n cou nters", JOURNAL OF SCIENTIFIC INSTRUMENTSJOURNAL OF PHYSICS E SERIES, vol. 2, 1 janvier 1968 (1968-01-01), XP055284134,

## Description

### DOMAINE DE L'INVENTION

La présente invention est relative à un dispositif et à un procédé d'analyse in situ d'un déchet radiologique contenant l'isotope chlore 36.

Elle a donc trait aux caractérisations radiologiques (mesures nucléaires) de matières issues du démantèlement d'un site nucléaire ou d'un processus de production nucléaire.

### ARRIERE PLAN TECHNOLOGIQUE DE L'INVENTION

On connaît le besoin de mesurer la teneur en isotope chlore 36 (¹⁶Cl) présent dans certains déchets radiologiques, notamment dans le graphite des réacteurs des filières de réacteurs graphite gaz.

Et l'on souhaite toujours améliorer la mesure du chlore 36.

Le but est de mieux connaitre la nature des déchets et notamment leur teneur en chlore 36. Le chlore 36 est un isotope radioactif à vie longue (de l'ordre de 300 000 ans). La connaissance de la teneur permet d'adapter les moyens industriels de traitement et de stockage au juste nécessaire. Cette mesure représente donc un grand enjeu économique.

La problématique à résoudre est la difficulté de mesure in situ de l'activité de ce radio-isotope alors que cette valeur peut être déterminante pour le choix des moyens de traitement et de stockage en aval.

En effet, le démantèlement des réacteurs de la filière graphite-gaz génère des dizaines de milliers de tonnes de graphite contenant ou pouvant contenir du chlore 36. On a affaire à la même problématique lors de la production de rejets ou du contrôle d'effluents liquides ou gazeux.

Jusqu'ici, on ne connaît pas de mesure in situ. En pratique, l'évaluation de la teneur en chlore 36 est effectuée par analyse physico-chimique sur des prélèvements de déchets.

Actuellement, des prélèvements de quelques grammes sont effectués et traités chimiquement pour en extraire le chlore, puis traités physiquement afin d'évaluer la teneur en chlore 36 au sein de cet extrait.

L'avantage principal de cette méthode analytique est la fiabilité et la très grande précision de la mesure.

Mais ses inconvénients sont majeurs.

En effet, cette méthode présente une représentativité faible, avec un gros risque d'erreur d'échantillonnage, qui ne peut être diminué que par un accroissement du nombre des prélèvements. On comprend aisément que cela entraîne une hausse importante des coûts. Par ailleurs, il faut veiller à la sécurité lors de l'analyse, ainsi qu'aux risques radiologiques (contamination, etc.).

Par ailleurs, les laboratoires qui pratiquent ce genre d'analyses sont rares, de sorte que le délai est important entre les prélèvements et les résultats, ce qui rend difficile un traitement industriel des déchets concernés.

En matière de documents écrits, l'arrière-plan technologique de l'invention peut être illustré par :
- RODRIGUEZ M ET AL : « Radiochemical analysis of chlorine-36 », CZECHOSLOVAK JOURNAL OF PHYSICS, KLUWER ACADEMIC PUBLISHERS-CONSULTANTS BUREAU, NE, vol. 56, no. 1, 1er janvier 2006;
- J A B GIBSON ET AL : « Absolute standardization with liquid scintillation counters Absolute standardization with liquid scintillaton counters », JOURNAL OF SCIENTIFIC INSRUMENTS JOURNAL OF PHYSICS E SERIES, vol. 2, 1er janvier 1968;
- WO 2013/120919A1 divulgue un procédé de décontamination par broyage pour mieux sélectionner les matériaux de haute activité provenant du Cl-36 et/ou C-14.

La présente invention a pour but de résoudre les difficultés détaillées plus haut en proposant des solutions d'analyse permettant de travailler in situ, c'est-à-dire sans avoir à prélever d'échantillon.

### RESUME DE L'INVENTION

Ainsi, un premier aspect de l'invention concerne un dispositif d'analyse in situ d'un déchet radiologique contenant l'isotope chlore 36, selon la revendication 1.

Un autre aspect de l'invention est relatif à un procédé d'analyse in situ d'un déchet radiologique contenant l'isotope chlore 36, selon la revendication 8.

D'autres caractéristiques sont présentées dans les revendications dépendantes.

### BREVE DESCRIPTION DES DESSINS

D'autres caractéristiques et avantages de l'invention apparaîtront à la lecture de la description suivante d'un mode de réalisation préféré de l'invention. Cette description est faite en référence aux dessins annexés dans lesquels :
- les figures 1 et 2 sont des vues très schématiques de dessus et de face qui permettent d'illustrer le principe de fonctionnement du dispositif selon l'invention ;
- la figure 3 est une vue de face d'un mode de réalisation du dispositif de l'invention ;
- la figure 4 est un vue, également de face, d'une variante de ce dispositif ;
- la figure 5 est un graphique de performance opérationnelle montrant l'activité du chlore 36 d'une fausse chemise en graphite.

### DESCRIPTION DETAILLEE DE L'INVENTION

Le principe de mesure du chlore 36 est basé sur le fait que le chlore 36 émet des β⁺ autrement dit des positons ou électrons positifs. Emis dans le graphite (ou plus généralement dans la matière de l'objet en graphite), ces électrons positifs rencontrent très rapidement des électrons standards (négatifs) avec lesquels ils s'annihilent et induisent l'émission, pour chaque β⁺, de 2 rayonnements gamma (γ) de 511 keV d'énergie émis à 180° l'un de l'autre. C'est principalement ce principe de mesure qui est utilisé dans le cadre de la présente invention.

Une solution proposée dans la présente demande consiste en un instrument spécifique permettant directement la mesure globale du chlore 36 contenu dans un objet.

A titre d'exemple, cet objet peut être une chemise de graphite consistant en un cylindre creux de 20 cm de diamètre environ et de 60 cm de longueur dont le poids est d'environ 20 kilogrammes.

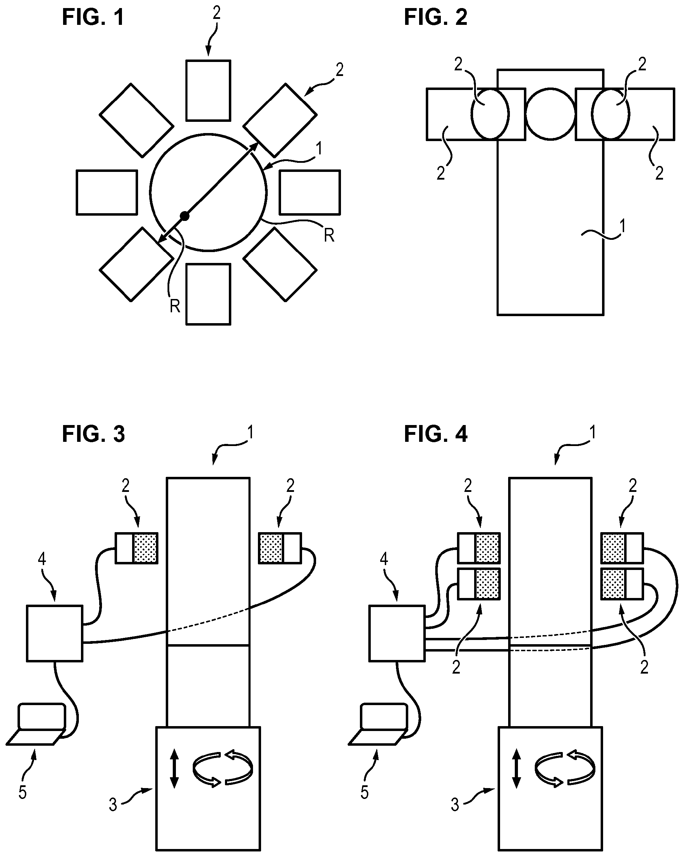

En se reportant aux figures 1 et 2 annexées, on constate que ce dispositif comporte un ensemble de détecteurs 2 configurés pour détecter les doubles coïncidences de rayonnements gamma R de 511 KeV émis par ledit déchet 1 qui, dans ce cas d'espèce, consiste en la chemise précitée.

Dans des variantes de réalisation, le déchet (quand il est solide comme c'est le cas ici) peut prendre une toute autre forme. Cette forme de chemise cylindrique est utilisée dans le cadre de centrales nucléaires, ce qui explique qu'on l'ait utilisée comme illustration possible du dispositif selon l'invention.

Une autre forme possible pour le déchet est une forme parallélépipédique (c'est à dire en forme de brique de graphite), mais cela n'est aucunement limitatif.

En se reportant cette fois-ci aux figures 3 et 4 où le dispositif est représenté dans sa globalité, la chemise 1 repose sur un socle 3. Ainsi que le montrent les doubles flèches de ces figures, le socle comporte des moyens qui permettent non seulement de le mouvoir en translation (c'est à dire de bas en haut et de haut en bas), mais aussi en rotation autour de lui-même (dans les deux sens opposés).

Ces moyens ne sont pas représentés, ni décrits, car ils ne constituent pas le cœur de l'invention à proprement parler. Le support des détecteurs n'a pas non plus été représenté, dans un but de simplification.

Ils permettent que l'ensemble de l'objet puisse être examiné de manière homogène par les détecteurs 2.

Bien entendu, on peut envisager une "inversion cinématique" de ce dispositif, c'est-à-dire une variante dans laquelle le socle 3 serait fixe et où l'ensemble des détecteurs 2 pourraient être animés des deux mouvements de translation et de rotation évoqués plus haut.

Les détecteurs 2 sont ici au nombre de huit. Bien entendu, ce nombre n'est pas limitatif. Il est toutefois au moins égal à deux puisque l'on recherche à détecter les coïncidences de rayonnements gamma de 511 KeV émis par ledit déchet renfermant du chlore 36. Un nombre égal à 32 semble être un compromis raisonnable avec un rapport coût/résultats de mesure.

On notera que les détecteurs peuvent être disposés sur deux "étages", c'est à dire superposés par paires, ainsi que le montre la figure 4.

Des détecteurs utilisables et préconisés pour la réalisation du dispositif de l'invention sont des détecteurs en matériau LaBr3. Ces détecteurs présentent un bon compromis en termes de sensibilité de détection, de résolution en énergie (capacité de spectrométrie gamma) et de résolution temporelle (capacité de discrimination temporelle qui doit atteindre la nanoseconde environ).

Une carte électronique 4 et un ordinateur 5 de pilotage assurent le contrôle de l'instrument, la réalisation et la gestion des acquisitions, le traitement des informations et la sortie des résultats.

Les détecteurs 2 disposés autour de l'objet mesuré sont donc susceptibles de détecter des rayonnements gamma. Lorsque deux détecteurs détectent chacun un rayonnement gamma de 511 keV au même instant, il est très probable, sauf coïncidence fortuite, qu'il s'agisse de l'annihilation d'un positon et d'un électron. Ce système permet donc de comptabiliser ces annihilations dont le nombre, après calibration, permet de calculer le nombre de β⁺ émis dans la matière.

Pour déterminer l'activité du Chlore 36 lui-même, qui est à l'origine de seulement une partie des β⁺, il est nécessaire de tenir compte des coïncidences correspondant à d'autres origines.

Ainsi, le dispositif utilise les détecteurs 2, qui détectent les rayonnements gamma de 511 keV coïncidents, pour réaliser une spectrométrie gamma (qui est donc résolue spatialement du fait d'un indexage mécanique lors des déplacements en rotation et en translation du socle 3).

Cette spectrométrie gamma permet d'identifier et de quantifier les émetteurs β⁺ également émetteurs gamma (tel que l'Europium 152 par exemple) dont la contribution, c'est à dire le nombre, est retranché du nombre de doubles coïncidences.

La spectrométrie gamma permet également de quantifier la création de β⁺ par les rayonnements gamma de haute énergie éventuellement émis. Le phénomène mis en œuvre est la création de paires électron-positon par les rayons gamma d'énergie supérieure à 1.022MeV (typiquement par exemple issus du cobalt 60).

Le dispositif utilise le résultat de la spectrométrie gamma pour calculer la création de β⁺ par création de paires. Cela suppose bien entendu que le dispositif ait été calibré pour cela préalablement.

De plus, un principe dit de "triple coïncidence" permet d'évaluer de manière plus précise le nombre de positons issus de la création de paires provoquée par un rayonnement gamma provenant du cobalt 60.

Ceci est basé sur le fait que le cobalt 60 émet deux rayonnements gamma synchrones de haute énergie. Si l'un des deux rayonnements gamma se transforme en paire positon-électron, les détecteurs sont susceptibles de détecter au même moment les deux photons issus de l'annihilation du positon créé, ainsi que le deuxième rayonnement gamma émanant du cobalt.

Le fait d'équiper le dispositif d'un grand nombre de détecteurs accroit la probabilité de détecter des triples coïncidences et, au final, d'obtenir un meilleur résultat relatif au chlore.

Un élément qui peut être important pour le calcul correctif des b+ créés par les rayonnements gamma de haute énergie est le calcul des densités locales de l'objet (autrement dit des« pertes de masse »). Ce calcul est réalisé par recoupement (auto-tomographie) à partir des informations issues de chaque région de l'objet vue par différents détecteurs sous différents angles.

L'instrument est également capable d'évaluer le taux de coïncidences fortuites (c'est-à-dire quand deux rayonnements gamma de 511 keV non corrélés entre eux sont détectés) qui l'affecte.

Dans ces conditions, le dispositif intègre une partie logicielle (qui opère le traitement des mesures décrites ci-dessus) très importante.

En résumé, cet instrument intégré utilise par exemple huit détecteurs placés face à face deux à deux, autour de l'objet à analyser. Il utilise les coïncidences de détection entre eux, en déduit le taux d'émission β⁺ de l'objet, identifie les émetteurs β⁺ et gamma par spectrométrie, et établit à partir de ces spectres gamma la cartographie de la densité de l'objet et l'émission β⁺ par création de paires. L'instrument n'a pas besoin d'autres informations pour fonctionner que celles qu'il produit.

A noter cependant que l'instrument quantifie en fait la somme des émetteurs β⁺ non émetteurs gamma. Dans le cas particulier des graphites issus de la filière des réacteurs graphite / gaz, il semble qu'il s'agisse exclusivement du chlore 36. S'il y a d'autres éléments émetteurs b+ purs (sans émission gamma qui permette de les identifier et quantifier), l'instrument délivrera un majorant de l'activité du chlore 36.

L'ensemble de ces étapes est regroupé sous la forme d'un tableau figurant à la fin du présent texte.

L'application essentiellement visée par la présente demande est le tri industriel ou le traitement approprié des graphites issus des réacteurs graphite /gaz sur la base, notamment, de leur teneur en chlore 36.

Une des applications potentielles est la mesure en temps réel de la teneur en émetteurs b+ d'un effluent gazeux, liquide, voire solide, circulant dans une canalisation pour les besoins d'un contrôle (alarme, suivi, inventaire,...) de procédé.

Dans le cas d'un liquide ou d'un gaz, on peut envisager d'avoir affaire à un tuyau comparable à la chemise précitée où circule le fluide, autour duquel les détecteurs sont placés.

Une mesure effectuée pendant la circulation du fluide dans le tuyau donnerait la valeur moyenne du chlore 36 du fluide qui a traversé le dispositif pendant la période de mesure.

Alors, le nombre de détecteurs, la vitesse du liquide (ou du gaz ou du solide) et le temps d'acquisition élémentaire doivent être adaptés pour obtenir une mesure dont les incertitudes soient de l'ordre de grandeur attendu.

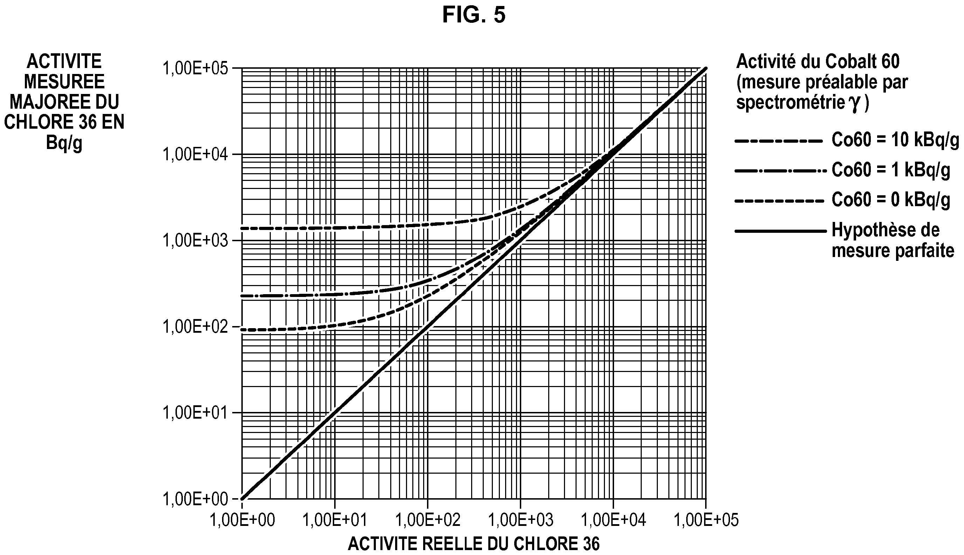

A la figure 5 est représenté un graphique de performance opérationnelle théorique montrant l'activité du chlore 36 d'une fausse chemise en graphite, de 20 Kg.

On entend par "fausse" chemise, le fait qu'on ait affaire à un élément composé de graphite pur, sans insert métallique, qui a une activité maximale de l'ordre de 500 µSv/h. Sa contamination est de l'ordre de 0.5 Bq/cm² et le spectre de contamination est le spectre combustible.

L'activité mesurée est majorée de deux écarts types. L'activité réelle de l'objet est inférieure à cette valeur avec un niveau de confiance de 97.5 %.

Les hypothèses suivantes ont été prises :
1/Emetteurs β⁺ autres que le Cl36 : production de positons égale à celle du chlore 36 (quand il s'agit de Eu, l'activité en Becquerels est sensiblement égale à celle du chlore 36 ;
2/ Mesure de ces émetteurs par spectroscopie Gamma (écart type 10% ;
3/ Pas d'émetteur β⁺ pur autre que le chlore 36 ;
4/Ecart type de mesure (spectrométrie, calcul, triple coïncidence) des positons du cobalt 60 : 10 % ;
5/ Ecart type d'erreurs fortuites : 10% ;
6/ Erreur "poissonnienne" sur le total des coïncidences.

| Etape | But et résultat |
|---|---|
| Mesure du nombre total de coïncidences | Estimation de l'erreur selon la loi de Poisson et de l'erreur de coïncidences fortuites. |
| Spectrométrie consistant en : | |
| a) Identification et quantification des émetteurs béta + et gamma | Estimation de l'erreur associée |
| b) Mesure des flux de rayonnement gamma de haute énergie et estimation du flux de positons issus des créations de paires | Estimation de l'erreur associée à la mesure du flux puis à sa conversion en taux de création de paires |
| c) comptage des triples coïncidences de 511 keV dues au cobalt 60 | Evaluation confortée des créations de paires |
| Obtention du nombre "net" de positons dus aux émetteurs béta + "gamma silencieux*", dont le chlore 36 | Calcul final de l'erreur portant sur ce nombre net |
| Sans plus de connaissance sur la présence d'autres émetteurs béta + "gamma silencieux", affectation de l'intégralité du résultat à la présence du chlore 36 pour constituer un majorant de son activité | Le majorant calculé est également, le cas échéant, majoré de l'incertitude de mesure qui aura été calculée |

| | |
|---|---|
| (*) : On entend ici les émetteurs beta + qui sont silencieux du point de vue des rayons gamma car ils n'émettent pas. | |

Le dispositif selon l'invention, ainsi que le procédé qui le met en oeuvre peuvent être utilisés directement sur un site où sont stockés les objets à contrôler, et non pas seulement dans le cadre d'un laboratoire. L'utilisation peut conduire par exemple à un tri de ces objets entreposés sur la base des résultats de mesure du Chlore 36. Ainsi, en fonction de la teneur mesurée, on va opter pour un enfouissement plus ou moins profond des déchets. La mesure effective du chlore 36 permet donc un déploiement de moyens de traitement et de stockage des déchets en graphite qui correspond au juste nécessaire et, par voie de conséquence au moindre coût.

Ce dispositif permet une mesure globale et non destructive de l'objet considéré, à l'inverse de toutes les mesures alternatives par échantillonnage et analyse radiochimique complexe. Il faut par ailleurs noter que le chlore 36 se répartit de manière très hétérogène dans un matériau, ce qui décrédibilise une mesure par échantillonnage.

Les personnes susceptibles d'utiliser le dispositif selon l'invention sont par exemple les opérateurs, producteurs, vérificateurs, instances de contrôle de déchets radioactifs, par exemple à l'occasion d'opérations de démantèlement ou de production de déchets ou de rejets.

Bien entendu, des moyens de mesures qui permettent de déduire, au moins à partir de la mesure des coïncidences relevées par les détecteurs, la teneur en chlore 36 du déchet, autres ceux qui viennent d'être décrits précédemment, peuvent être utilisés.

## Revendications

1. Dispositif d'analyse in situ d'un déchet radiologique (1) contenant l'isotope chlore 36, **caractérisé par le fait qu'**il comporte :
- un support de réception (3) dudit déchet (1) ;
- un ensemble d'au moins deux détecteurs (2) configurés pour détecter les coïncidences de rayonnements gamma de 511 KeV émis par ledit déchet ;
- ledit support (3) et ledit ensemble étant mobiles l'un par rapport à l'autre ;
- des moyens de mesure permettant de déduire, au moins à partir de la mesure de ces coïncidences, la teneur en chlore 36 dudit déchet (1), et que
- lesdits moyens de mesure comprennent au moins un processeur (4) et un ordinateur de pilotage (5) qui assurent le contrôle desdits détecteurs, la réalisation et la gestion des acquisitions des coïncidences, le traitement des informations collectées et l'affichage des résultats, ces moyens de mesure étant configurés pour identifier et quantifier les coïncidences de rayonnements gamma émises par d'autres espèces atomiques que le chlore 36, et retrancher cette quantification à la somme totale des coïncidences.

2. Dispositif selon la revendication 1, **caractérisé par le fait que** ledit support (3) et ledit ensemble sont mobiles l'un par rapport à l'autre en rotation et/ou en translation.

3. Dispositif selon l'une des revendications précédentes, **caractérisé par le fait que** lesdits détecteurs (2) sont disposés au sein dudit ensemble, de façon annulaire autour dudit support (3) et en regard dudit déchet (1).

4. Dispositif selon la revendication 3, **caractérisé par le fait que** lesdits détecteurs (2) sont au moins au nombre de huit.

5. Dispositif selon l'une des revendications précédentes, **caractérisé par le fait que** lesdits détecteurs (2) sont des scintillateurs ou des diodes en matériaux semi-conducteurs.

6. Dispositif selon l'une des revendications 1 ou 5, **caractérisé par le fait que** lesdits détecteurs (2) sont configurés non seulement pour détecter les coïncidences de rayonnements gamma de 511 KeV émis par ledit déchet (1), mais également les triples coïncidences.

7. Dispositif selon l'une des revendications 1 à 6, **caractérisé par le fait que** lesdits détecteurs (2) sont configurés pour détecter le taux de coïncidences fortuites, c'est-à-dire quand sont détectés deux photons non corrélés entre eux.

8. Procédé d'analyse in situ d'un déchet radiologique contenant l'isotope chlore 36 à l'aide d'un dispositif selon l'une des revendications précédentes, **caractérisé par le fait qu'**il comprend au moins le fait de déposer ledit déchet (1) sur ledit support (3) et de détecter les coïncidences de rayonnements gamma de 511 KeV émis par ledit déchet (1).

9. Procédé selon la revendication 8, **caractérisé par le fait que** l'on procède à l'analyse d'un déchet solide (1) qui se présente notamment sous la forme d'un cylindre creux.

10. Procédé selon la revendication 8, **caractérisé par le fait que** l'on procède à l'analyse d'un déchet qui se présente sous forme liquide ou gazeuse.

11. Procédé selon la revendication 10 dans lequel le déchet est sous forme liquide, **caractérisé par le fait que** ledit déchet est contenu dans un récipient ou circule dans une canalisation autour de laquelle lesdits détecteurs (2) sont disposés.

12. Procédé selon la revendication 10 dans lequel le déchet est sous forme gazeuse, **caractérisé par le fait que** ledit déchet est contenu dans un récipient ou circule dans une canalisation autour de laquelle lesdits détecteurs (2) sont disposés.

## Patentansprüche

1. Vorrichtung zur in-Situ-Analyse eines radiologischen Abfalls (1), der das Isotop Chlor-36 enthält, **dadurch gekennzeichnet, dass** sie folgendes umfasst:
- eine Halterung zur Aufnahme (3) des Abfalls (1);
- eine Gesamtheit von wenigstens zwei Detektoren (2), konfiguriert zum Detektieren der Koinzidenzen von Gammastrahlen von 511 KeV, ausgesendet von dem Abfall;
- wobei die Halterung (3) und die Gesamtheit zueinander mobil sind;
- Messmittel, die es ermöglichen, wenigstens von der Messung der Koinzidenzen den Gehalt an Chlor-36 des Abfalls (1) zu deduzieren, und dass
- die Messmittel wenigstens einen Prozessor (4) und einen Steuercomputer (5) umfassen, welche die Kontrolle der Detektoren, die Umsetzung und die Steuerung der Erfassungen der Koinzidenzen, die Verarbeitung der gesammelten Informationen und die Anzeige der Ergebnisse gewährleisten, wobei diese Messmittel konfiguriert sind, um die Koinzidenzen der Gammastrahlen, ausgesendet von anderen atomaren Arten als Chlor-36, zu identifizieren und zu quantifizieren, und diese Quantifikation von der Gesamtsumme der Koinzidenzen zu subtrahieren.

2. Vorrichtung nach Anspruch 1, **dadurch gekennzeichnet, dass** die Halterung (3) und die Gesamtheit drehend und/oder übersetzend zueinander mobil sind.

3. Vorrichtung nach einem der vorhergehenden Ansprüche, **dadurch gekennzeichnet, dass** die Detektoren (2) innerhalb der Gesamtheit ringförmig um die Halterung (3) herum und gegenüber dem Abfall (1) angeordnet sind.

4. Vorrichtung nach Anspruch 3, **dadurch gekennzeichnet, dass** die Detektoren (2) wenigstens acht an der Zahl sind.

5. Vorrichtung nach einem der vorhergehenden Ansprüche, **dadurch gekennzeichnet, dass** die Detektoren (2) Szintillatoren oder Dioden aus halbleitenden Materialien sind.

6. Vorrichtung nach einem der Ansprüche 1 oder 5, **dadurch gekennzeichnet, dass** die Detektoren (2) nicht nur konfiguriert sind, um die Koinzidenzen von Gammastrahlen von 511 KeV, ausgesendet von dem Abfall (1), zu detektieren, sondern ebenso die dreifachen Koinzidenzen.

7. Vorrichtung nach einem der Ansprüche 1 bis 6, **dadurch gekennzeichnet, dass** die Detektoren (2) konfiguriert sind, um die Quote an zufälligen Koinzidenzen zu detektieren, das heißt wenn zwei Photonen detektiert werden, die nicht in Beziehung zueinander stehen.

8. Verfahren zur in-Situ-Analyse eines radiologischen Abfalls, der das Isotop Chlor-36 enthält, mithilfe einer Vorrichtung nach einem der vorhergehenden Ansprüche, **dadurch gekennzeichnet, dass** es wenigstens das Ablegen des Abfalls (1) auf der Halterung (3) und das Detektieren der Koinzidenzen von Gammastrahlen von 511 KeV, ausgesendet von dem Abfall (1), umfasst.

9. Verfahren nach Anspruch 8, **dadurch gekennzeichnet, dass** man die Analyse eines festen Abfalls (1) durchführt, der sich insbesondere in Form eines hohlen Zylinders zeigt.

10. Verfahren nach Anspruch 8, **dadurch gekennzeichnet, dass** man die Analyse eines Abfalls durchführt, der in flüssiger oder gasförmiger Form vorliegt.

11. Verfahren nach Anspruch 10, in welchem der Abfall in flüssiger Form vorliegt, **dadurch gekennzeichnet, dass** der Abfall in einem Gefäß enthalten ist oder in einer Kanalisation zirkuliert, in deren Umgebung die Detektoren (2) angeordnet sind.

12. Verfahren nach Anspruch 10, in dem der Abfall in gasförmiger Form vorliegt, **dadurch gekennzeichnet, dass** der Abfall in einem Gefäß enthalten ist oder in einer Kanalisation zirkuliert, in deren Umgebung die Detektoren (2) angeordnet sind.

## Claims

1. Device for *in situ* analysis of radioactive waste (1) containing the chlorine-36 isotope, **characterised in that** it includes:
- a holder (3) for said waste (1);
- an array of at least two detectors (2) configured to detect coincidences of gamma rays of 511 KeV emitted by said waste;
- said holder (3) and said array being movable in relation to one another;
- measuring means for determining, at least on the basis of the measurement of these coincidences, the chlorine-36 content in said waste (1), and that
- said measuring means comprise at least a processor (4) and a controlling computer (5) that carry out control of said detectors, coincidence acquisition procedures and management, processing of the data collected and display of results, these measuring means being configured to identify and quantify the coincidences of gamma rays emitted by other atomic species than chlorine-36, and to subtract this quantification from the total sum of the coincidences.

2. Device according to claim 1, **characterised in that** said holder (3) and said array are movable in relation to one another by rotation and/or translation.

3. Device according to one of the preceding claims, **characterised in that** said detectors (2) are disposed inside said array, in an annular fashion around said holder (3) and facing said waste (1).

4. Device according to claim 3, **characterised in that** said detectors (2) are at least eight in number.

5. Device according to one of the preceding claims, **characterised in that** said detectors (2) are scintillators or diodes made of semiconductor materials.

6. Device according to one of claims 1 or 5, **characterised in that** said detectors (2) are configured not only to detect coincidences of gamma rays of 511 KeV emitted by said waste (1), but also triple coincidences.

7. Device according to one of claims 1 to 6, **characterised in that** said detectors (2) are configured to detect the rate of fortuitous coincidences, i.e. when two photons that are not correlated with one another are detected.

8. Process for *in situ* analysis of radioactive waste containing the chlorine-36 isotope using a device according to one of the preceding claims, **characterised in that** it comprises at least depositing said waste (1) on said holder (3) and detecting the coincidences of gamma rays of 511 KeV emitted by said waste (1).

9. Process according to claim 8, **characterised in that** solid waste (1) presented particularly in the form of a hollow cylinder is analysed.

10. Process according to claim 8, **characterised in that** waste presented in liquid or gaseous form is analysed.

11. Process according to claim 10 wherein the waste is in liquid form, **characterised in that** said waste is contained in a container or circulates in a pipe about which said detectors (2) are disposed.

12. Process according to claim 10 wherein the waste is in gaseous form, **characterised in that** said waste is contained in a container or circulates in a pipe about which said detectors (2) are disposed.
